**Europäisches Patentamt**

(19) **European Patent Office**

**Office européen des brevets**

(11) Numéro de publication: **0 097 602**
**B1**

(12) **FASCICULE DE BREVET EUROPEEN**

(45) Date de publication du fascicule du brevet:
**14.05.86**

(21) Numéro de dépôt: **83420099.0**

(22) Date de dépôt: **10.06.83**

(51) Int. Cl.⁴: **G 01 B 5/18**

(54) **Jauge de contrôle de profondeur d'un trou.**

(30) Priorité: **14.06.82 FR 8210832**

(43) Date de publication de la demande:
**04.01.84 Bulletin 84/1**

(45) Mention de la délivrance du brevet:
**14.05.86 Bulletin 86/20**

(84) Etats contractants désignés:
**AT BE CH DE FR GB IT LI LU NL SE**

(56) Documents cités:
**DE - A - 1 698 339**
**US - A - 2 517 846**
**US - A - 4 314 406**

**TECHNICAL DIGEST - WESTERN ELECTRIC, no. 24,**
**octobre 1971, page 23-24, New York, US, J.O. LANDIS,**
**JR.: "Gauge for measuring the threaded depth of holes"**
**IBM TECHNICAL DISCLOSURE BULLETIN, vol. 13, no.5,**
**October 1970, page 1335, Armonk, US, J.F.**
**STRAITWELL: "Thread depth measurement"**

(73) Titulaire: **ETABLISSEMENTS J.M. CHAUQUET,**
**B.P. 11 Scionzier, F-74300 Cluses (FR)**

(72) Inventeur: **Chauquet, Jacques, Route de l'Hotel de**
**Bellevue Ayze, F-74130 Bonneville (FR)**

(74) Mandataire: **de Beaumont, Michel, Cabinet Poncet**
**B.P. 317, F-74008 Annecy Cédex (FR)**

ACTORUM AG

## Description

La présente invention concerne les jauges utilisées dans l'industrie pour mesurer ou contrôler la profondeut d'un trou éventuellement taraudé dans une pièce à contrôler.

Le contrôle des trous taraudés est habituellement réalisé en deux opérations successives: une première opération de contrôle de diamètre et de qualité est réalisée en vissant dans le trou taraudé un ou plusieurs tampons-étalons comprenant une tête filetée, une portion centrale rétrécie et un manche de manoeuvre. Une seconde opération de contrôle de profondeur est réalisée en vissant dans le trou taraudé un tampon de longueur, comprenant par exemple une tête filetée, un manche de manoeuvre, et un épaulement destiné à venir porter sur les bords du trou en fin de vissage. Le coût élevé des tampons-étalons conduit à utiliser le même tampon-étalon pour le contrôle de tous les taraudages de mêmes caractéristiques mais de profondeurs quelconques, et à prévoir un tampon de longueur différent pour chaque profondeur de taraudage. Toutefois, l'usure d'un tampon de longueur, à la suite de nombreux contrôles, n'est pas compensable et amène la mise au rebut de ce tampon que son exécution unitaire rend par ailleurs d'un coût relativement élevé.

On a proposé des jauges comportant certains perfectionnements. Ainsi la revue Technical Digest - Western Electric, no. 24, octobre 1971, pages 23-24, New York, US («Gauge for measuring the threaded depth of holes» J.O. Landis, Jr.), décrit une jauge comprenant un corps muni d'une sonde destinée à pénétrer dans le trou, une pièce mobile coulissant librement sur le corps et dont l'extrémité antérieure vient porter contre la partie extérieure de la pièce à contrôler; des butées limitent le coulissement de la pièce mobile et interdisent sa rotation par rapport au corps. Ce dispositif présente l'inconvénient d'être spécialisé pour une seule dimension de trou, et pour chaque diamètre et/ou profondeur il faut une jauge adéquate. La longueur de la sonde et sa position par rapport au corps ne sont pas réglables, la sonde n'étant en outre pas interchangeable. La pièce mobile fait office d'organe de manoeuvre, et est nécessairement entraînée en rotation, ce qui interdit l'utilisation de ce type de jauge dans certaines applications.

La revue IBM TECHNICAL DISCLOSURE BULLETIN, vol. 13, no. 5, octobre 1970, page 1335, Armonk, US («Thread depth measurement» J.F. Straitwell), décrit une jauge similaire dans laquelle une sonde est rapportée par vissage sur un axe central d'un corps faisant office d'organe de manoeuvre. Aucun moyen n'est prévu pour permettre le réglage axial de la sonde sur le corps. Une pièce mobile coulisse et tourne librement sur le corps et vient porter contre la pièce à contrôler. L'utilisation doit maintenir volontairement la pièce mobile plaquée contre la pièce à contrôler. En outre le dispositif ne permet pas l'utilisation des tampons-étalons du commerce, les sondes devant être réalisée spécialement pour s'adapter sur le corps.

Le brevet US-A-4 314 406 décrit un dispositif permettant une mesure par transfert et report sur un appareil de mesure annexe, ce qui complique notablement les opérations.

Les brevets DE-A-1 698 339 et US-A-2 517 846 décrivent des jauges de profondeur micrométriques dont la fonction est de mesurer une profondeur de trou et ne peuvent mesurer une profondeur de taraudage. En effet, une pièce mobile, portant sur la pièce à contrôler, se déplace par rapport au corps exclusivement par vissage; le pas de ce vissage est pratiquement toujours incompatible avec le pas du taraudage à contrôler.

La présente invention a notamment pour objet d'obvier aux inconvénients des dispositifs connus en mettant à la disposition de l'utilisateur une jauge polyvalente, permettant un réglage aisé de la longueur utile de jauge pour l'adapter à longueur nominale du trou ou du taraudage à vérifier, soit que ce réglage soit rendu nécessaire par l'usure résultant d'un emploi intensif, soit que ladite longueur vienne à être modifiée du fait, par exemple, d'un changement de tolérance en cours de fabrication, soit que l'on désire tester des trous de longueurs nominales différentes.

Selon un autre objet de l'invention, le dispositif permet d'utiliser des sondes rapportées du commerce, et par exemple les tampons-étalons employés pour vérifier le diamètre et la qualité des taraudages exécutés. Le dispositif permet ainsi, par une seule manipulation de l'utilisateur, d'effectuer simultanément le contrôle de qualité et de diamètre du taraudage, et la mesure de sa longueur, alors que les dispositifs connus nécessitent deux opérations successives distinctes, une première pour le diamètre, une seconde pour la longueur.

Selon un autre objet de l'invention, le dispositif permet l'adaptation, sur la jauge, de tampons filetés ou de sondes dont les manches ont des diamètres et des formes très différents, permettant notamment le contrôle de trous ou de taraudages de dimensions très différentes.

Selon un autre objet de l'invention, le dispositif permet le contrôle de trous ménagés dans des pièces de formes différentes, en s'adaptant notamment à des surfaces de référence de différentes formes. Avec le dispositif de la présente invention, on peut par exemple vérifier des trous disposés au fond d'une rainure en prenant comme surface de référence le fond de la rainure. On peut aussi s'adapter à des surfaces de formes différentes telles que des cônes, des surfaces sphériques ou autres.

Selon un autre objet de l'invention, la jauge peut servir à des contrôles autres que ceux de profondeur taraudée utile, tels que des contrôles d'alésage borgnes, de portées de chambrages.

Selon un autre objet, l'invention permet de réaliser un outil de prix de revient très peu élevé, permettant toutefois un contrôle polyvalent remarquablement fiable et précis.

Pour ce faire, et selon l'invention comme indiqué dans la revendication 1, la jauge comprend un corps muni d'une sonde destinée à pénétrer dans le trou et des moyens de réglage pour régler la position axiale de la sonde par rapport au corps, par exemple un alésage longitudinal traversant dans lequel coulisse la sonde; des moyens solidarisent sélectivement le corps et la sonde; une pièce mobile, coulissant longitudinalement sur le corps, comporte une extrémité antérieure destinée à venir en butée contre la partie extérieure de la pièce à contrôler; des moyens élastiques repoussent la pièce mobile vers l'avant en direction de la pièce à contrôler, une butée limite le déplacement vers l'avant de la pièce mobile par rapport au corps; des moyens de repérage permettent de déterminer la position de la pièce mobile par rapport au corps en fin d'introduction de la sonde dans le trou.

Selon une première variante de l'invention, la pièce mobile est une tige coulissant dans un alésage excentré du corps.

Selon une autre variante, la pièce mobile est une bague coulissant sur la surface extérieure cylindrique du corps. On réalise ainsi un outil manuel facile à manipuler.

Selon une autre variante de l'invention, les moyens pour solidariser le corps et la sonde comprennent une douille d'adaptation rapportée sur le corps et interchangeable, munie d'un alésage longitudinal pour l'introduction de la sonde avec un faible jeu, et d'une vis radiale de blocage. La jauge permet l'adaptation de sondes de diamètres différents par changement de la douille.

Selon une autre variante, on pourra préférer solidariser le corps et la sonde à l'aide d'une pince élastique sensiblement cylindrique, munie d'un alésage longitudinal pour le passage de la sonde et dont la paroi est fendue; les extrémités de la surface extérieure de la paroi sont conformées en cônes, la pince étant insérée dans l'alésage longitudinal du corps pour venir porter contre un épaulement conique correspondant de l'alésage; la pince est poussée par un poussoir axial de serrage, le poussoir étant muni d'un alésage longitudinal pour le passage de la sonde, et étant réglable et bloquable en position longitudinale par rapport au corps. L'adaptation à des sondes de diamètre différents est ainsi automatique pour plusieurs diamètres voisins, par serrage et déformation de la pince.

Selon une autre variante de l'invention, le poussoir axial est une vis s'adaptant dans l'extrémité taraudée de l'alésage longitudinal du corps. Cette disposition permet de réaliser une jauge dans laquelle le poussoir est peu accessible, nécessitant un outil pour son démontage. Une telle jauge est particulièrement adaptée aux contrôles effectués en cours de fabrication de pièces, car on évite ainsi les possibilités de déréglage en longueur, la sonde ne pouvant par être désolidarisée du corps et déplacée sans l'utilisation d'un outil.

Selon une autre variante de l'invention, le poussoir axial est une bague taraudée, adaptée par vissage sur l'extrémité postérieure filetée du corps. Une telle disposition permet de réaliser une jauge dans laquelle la sonde est facilement interchangeable et réglable en longueur. Une telle jauge est particulièrement adaptée aux contrôles effectués en laboratoires de contrôles.

Dans les modes de réalisation précédents, on pourra préférer ceux dans lesquels les pièces composant la jauge sont des pièces de révolution, de façon à faciliter la préhension du dispositif. Toutefois, lors du vissage et du dévissage, l'utilisateur est conduit à exercer un couple de rotation sur le corps du dispositif, et éventuellement sur la bague taraudée de serrage de pince. Il convient d'éviter que ce couple provoque la rotation de la bague par rapport au corps, ce qui conduirait à libérer la sonde et à modifier éventuellement le réglage en longueur de la jauge. On peut pour cela monter une bague folle sur la bague taraudée, bloquée longitudinalement sur la bague taraudée, et associée à des moyens de blocage ammovibles permettant de solidariser sélectivement les deux bagues. Le retrait des moyens de blocage libère la bague folle, de sorte que l'utilisateur n'a pas accès à la bague taraudée et ne peut désserrer la pince. On réalise ainsi également un outil adapté aux contrôles en cours de fabrication. Cette disposition permet en outre de prévoir une limitation du couple de manoeuvre maximum transmis à la sonde en disposant des moyens élastiques assurant un frottement entre la bague taraudée et la bague folle.

Selon une autre variante de l'invention, on adapte en bout de la pièce mobile une butée rapportée munie d'un alésage longitudinal pour le passage de la sonde, et conformée pour s'adapter à la forme de la surface de référence de la pièce à contrôler. Cela permet, avec la même jauge, par changement de la butée rapportée, de contrôler des trous dans des pièces comportant des surfaces extérieures différentes. Dans le cas de surfaces qui ne sont pas de révolution, on pourra avantageusement prévoir de monter la butée rapportée de manière à permettre sa rotation, en la maintenant seulement longitudinalement sur la pièce mobile. La rotation de la pièce mobile n'est ainsi pas entravée par le frottement de la butée contre la pièce à contrôler.

D'autres caractéristiques et avantages de la présente invention ressortiront de la description suivante de modes de réalisation particuliers, faite en relation avec les figures jointes parmi lesquelles:

la figure 1 représente une vue en perspective d'un mode de réalisation simplifié de la présente invention;

la figure 2 représente une vue en coupe longitudinale d'une jauge selon la présente invention dans un second mode de réalisation;

la figure 3 représente une vue en coupe longitudinale d'une jauge selon la présente invention dans un troisième mode de réalisation;

la figure 4 représente une vue en coupe longitudinale partielle d'une variante de la jauge selon le mode de réalisation de la figure 3;

la figure 5 représente une vue en demi coupe longitudinale du poussoir de pince selon un autre mode de réalisation; et

la figure 6 est destinée à illustrer le fonctionnement de la jauge selon la présente invention.

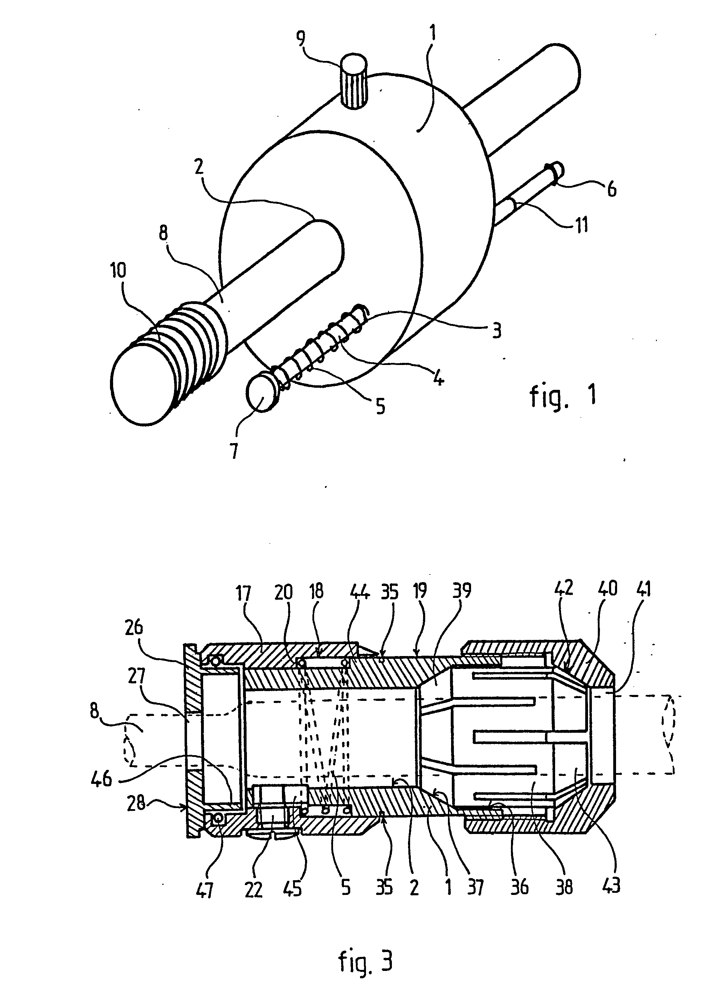

Dans le mode de réalisation simplifié de la figure 1, la jauge selon la présente invention comprend un corps 1 muni d'un alésage longitudinal 2 et d'un alésage secondaire décentré 3. Une tige mobile 4 coulisse dans l'alésage décentré 3, repoussée vers l'avant par un ressort 5, son mouvement étant limité par une butée 6 venant porter contre le corps 1 en fin course. L'extrémité antérieure 7 de la tige 4 est destinée à venir porter contre la surface extérieure de la pièce à contrôler, et coulisse dans l'alésage 3 lors de l'opération de contrôle. Une sonde 8 en forme de tige, telle qu'un tampon fileté, est introduite dans l'alésage longitudinal 2 et bloquée en position par une vis de blocage 9 radiale.

Le dispositif peut être utilisé pour vérifier la longueur utile des taraudages ménagés dans un alésage d'une pièce. Pour cela, la sonde 8 comprend une extrémité antérieure 10 filetée, destinée à être vissée dans le taraudage à contrôler. Lors du vissage, le corps, solidaire de la sonde 8, se rapproche de la pièce à contrôler, l'extrémité antérieure 7 de la tige mobile 4 venant porter contre la surface extérieure de la sonde 8 dans le corps 1 et en serrant la vis de blocage 9 de façon qu'en fin d'introduction de la sonde 8 dans le taraudage à contrôler, un repère 11 de la tige 4 vienne en regard d'une partie déterminée du corps 1.

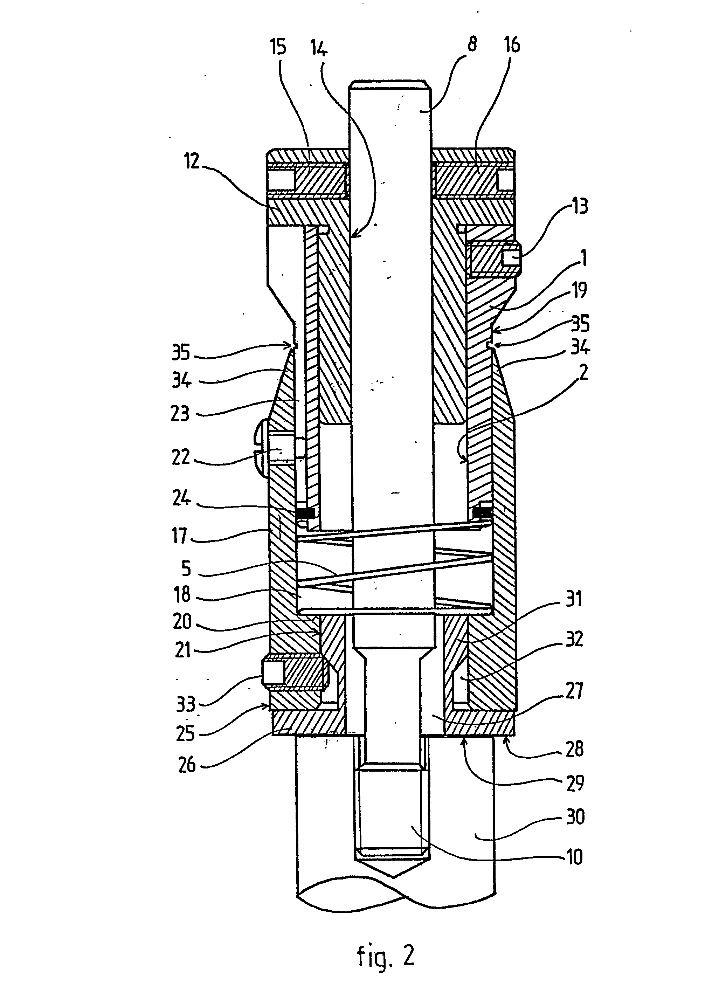

Dans le mode de réalisation de la figure 2, le corps 1 a une forme générale sensiblement cylindrique et comporte un seul alésage longitudinal central 2, de diamètre nettement supérieur au diamètre de la sonde 8. L'adaptation de la sonde 8 dans le corps 1 s'effectue par l'intermédiaire d'une douille d'adaptation 12, conformée pour se loger dans l'alésage 2 du corps 1 dans lequel elle est bloquée par une vis de blocage 13, et munie d'un alésage central longitudinal 14 dans lequel s'adapte la sonde 8 avec un faible jeu. La sonde est bloquée dans la douille d'adaptation 12 par des vis de blocage radiales 15 et 16.

Sur le corps 1 coulisse une pièce mobile, correspondant à la tige mobile 4 du premier mode de réalisation. Dans ce second mode de réalisation, la pièce mobile est une bague 17, munie d'un alésage longitudinal cylindrique 18 s'adaptant sur la surface extérieure 19 également cylindrique du corps 1. L'alésage 18 est limité par un épaulement antérieur 20 et se poursuit vers l'avant par un alésage 21 de plus petit diamètre. La bague 17 est bloquée en rotation par un ergot 22 tel qu'une vis, solidaire de la bague 17, et coulissant dans une reinure longitudinale 23 ménagée sur la surface extérieure 19 du corps 1. La course de la bague 17 est limitée vers l'avant par une butée 24 contre laquelle vient porter l'ergot 22 en fin de course. Un ressort 5 de compression porte sur la butée 24 solidaire du corps 1 et contre l'épaulement 20 solidaire de la bague 17, et tend à écarter la bague et le corps l'un de l'autre.

Sur la partie antérieure 25 de la bague 17, on rapporte une butée amovible 26, comportant un alésage longitudinal 27 de diamètre supérieur à la sonde 8 pour permettre son passage, et dont la face antérieure 28 est conformée pour s'adapter sur la face de référence 29 correspondante de la pièce à contrôler 30.

Dans le mode de réalisation représenté sur la figure 2, la butée rapportée 26 est montée folle en rotation sur la bague 17, et comporte une partie postérieure cylindrique 31 s'engageant dans l'alésage 21 de la bague, et munie d'une gorge périphérique 32 dans laquelle s'engage une vis radiale 33 de la bague 17.

L'extrémité postérieure 34 de la bague 17 est amincie et se termine en biseau, comme le représente la figure, l'extrémité du biseau étant destinée à venir coïncider, lors de l'opération de contrôle, avec un repère annulaire 35 ménagé sur la surface cylindrique extérieure 19 du corps 1. On pourra bien entendu ménager plusieurs repères annulaires successifs 35.

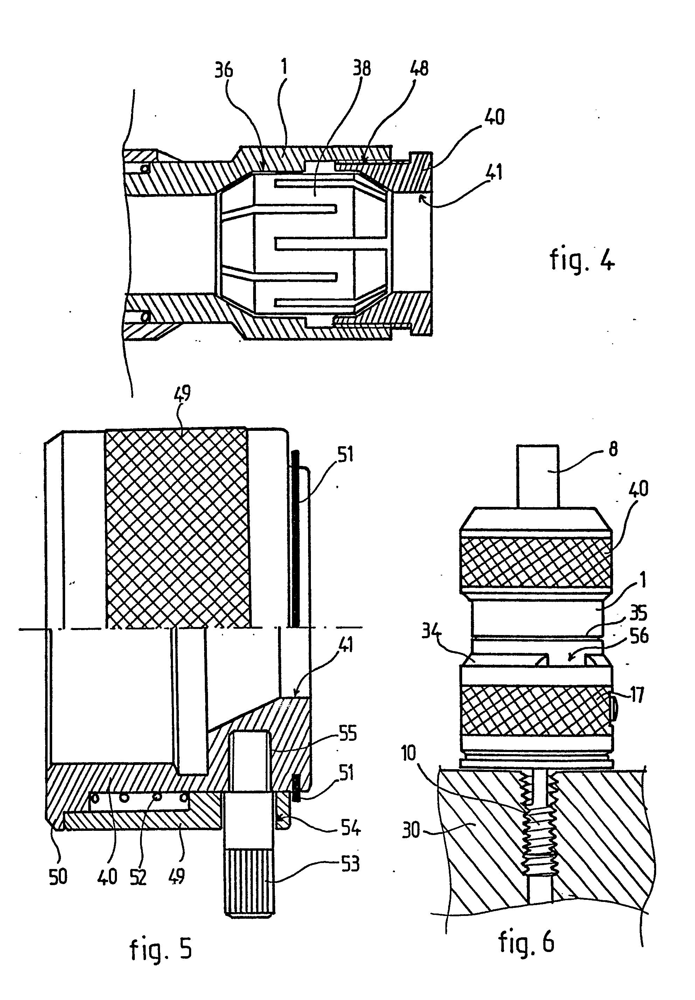

Le second mode de réalisation, représenté sur la figure 2, permet de réaliser une jauge plus compacte que le premier mode de réalisation, et plus commode à tenir dans la main. Toutefois, son adaptation à des sondes de diamètres différents nécessite de changer la douille d'adaptation 12. Un troisième mode de réalisation, représenté sur la figure 3, permet de faciliter l'adaptation sur des sondes de diamètres différents, et conduit à des réalisations encore plus compactes et présentant des fonctions plus complètes. Dans ce troisième mode de réalisation, le corps 1 est également de forme générale cylindrique, et comporte un alésage longitudinal 2 de diamètre supérieur au diamètre des sondes à insérer. L'alésage longitudinal 2 se prolonge vers l'arrière par un second alésage 36 de diamètre plus important auquel il se raccorde par un épaulement conique 37. Une pince élastique 38, dont la surface extérieure est cylindrique et conformée pour s'insérer dans le second alésage 36 du corps, est munie d'un alésage longitudinal pour le passage de la sonde 8. La paroi de la pince est fendue, comme le représente la figure, pour permettre sa flexion et son élasticité. Les extrémités de la surface extérieure de la pince sont coniques, l'extrémité antérieure 39 venant porter contre l'épaulement conique 37 du corps 1 pour provoquer le serrage de la pince sous l'action d'une poussée axiale de la pince vers l'avant. La pince 38 est poussée et maintenue en position par un poussoir 40 axial de serrage. Le poussoir 40 est lui-même muni d'un alésage longitudinal axial 41 pour permettre le passage d'une sonde 8, la partie antérieure de l'alésage 41 étant de diamètre suffisant et taraudée pour s'adapter par vissage sur la partie postérieure filetée du corps 1. Dans le mode de réalisation représenté sur la figure, le poussoir 40 comporte lui-même un épaulement intérieur conique 42 contre lequel vient porter la seconde extrémité 43 de la pince 38 également conique.

Le corps 1 comporte une surface extérieure cylindrique 19 munie d'un ou plusieurs repères annulaires 35 comme dans le mode de réalisation précédent. La partie antérieure du corps 1 est également sensiblement cylindrique, et de diamètre inférieur, raccordée à la partie postérieure 19 par un épaulement 44. Une bague 17 coulisse sur la surface extérieure 10 du corps 1 comme dans le mode de réalisation précédent, et comporte un alésage longitudinal 18 s'adaptant sur la surface extérieure 19 du corps 1, et un second alésage antérieur 21 de diamètre plus petit s'adaptant sur la partie antérieure du corps 1. Une vis 22, solidaire de la bague 17, coulisse dans une lumière longitudinale ménagée sur le corps 1 pour bloquer en rotation la bague 17 par rapport au corps. Un ressort 5 hélicoïdal de compression vient porter d'une part sur l'épaulement 20 de la bague 17 et sur l'épaulement 44 du corps 1 pour les écarter l'un par rapport à l'autre. Le vis 22 fait également office de butée, venant porter aux extrémités de la lumière correspondante 45 du corps 1 pour limiter le mouvement de la bague 17 vers l'avant et vers l'arrière.

Dans le mode de réalisation représenté sur la figure 3, la butée rapportée 26, comportant un alésage longitudinal 27 pour le passage de la sonde et une face antérieure 28 pour l'adaptation contre la pièce à contrôler, est simplement engagée en force dans l'extrémité antérieure de l'alésage central de la bague 17. Elle comporte pour cela une portion postérieure 46 légèrement conique en cône inversée, s'évasant vers l'arrière, et freinée en position par un joint torique 47 inséré dans une gorge circulaire de l'alésage de la bague 17.

Sur la figure 4 on a représenté un mode de réalisation dans lequel le serrage de la pince 38 est assuré par un poussoir 40 de forme différente: pour éviter les manoeuvres intempestives du poussoir 40, ce dernier est conformé en vis, comme le représente la figure, muni d'un alésage central 41 et d'une partie cylindrique filetée 48 s'engageant par vissage dans l'extrémité postérieure taraudée de l'alésage 36 du corps 1.

Sur la figure 5 on a représenté un mode de réalisation du poussoir de serrage de la pince 38 dans lequel le poussoir 40, en forme de bague comme dans le mode de réalisation de la figure 3, venant s'adapter par vissage sur la face extérieure du corps 1, est recouvert par une bague folle 49. Comme le représente la figure 5, la bague 49 folle tourne librement autour du poussoir cylindrique 40, et a ses mouvements longitudinaux limités par un épaulement antérieur 50 et une clavette postérieure 51 du poussoir. Un ressort 52 hélicoçdal, inséré dans un logement comme le représente la figure entre la bague folle et le poussoir, produit un frottement contrôlé entre la bague et le poussoir pour limiter le couple transmis au poussoir par la rotation de la bague à une valeur prédéterminée. Une vis de blocage 53 amovible permet, par passage dans une lumière 54 de la bague folle 49 et vissage dans un logement correspondant 55 du poussoir 40, de bloquer la bague sur le poussoir et de transmettre ainsi les efforts de rotation imprimés à la bague 49 au poussoir.

Sur la figure 6, on a représenté une vue de côté de la jauge selon le mode de réalisation de la figure 3. Les faces extérieures de la bague 17 et du poussoir 40 sont partiellement moletées pour faciliter la préhension. L'extrémité postérieure en biseau 34 de la bague 17 comporte des encoches 56 pour rendre partiellement visibles les repères annulaires 35 en cas de dépassement de ces repères par l'extrémité de la partie conique 34.

Le fonctionnement du dispositif est le suivant: on insère une sonde 8 dans l'alésage de la jauge, la sonde étant bloquée à une longueur prédéterminée par les moyens de blocage 40. On insère progressivement l'extrémité antérieure 10 de la sonde 8 dans la pièce 30 à contrôler. Lors de cette pénétration, la bague 17 vient en butée contre la face extérieure de la pièce 30, et est ainsi retenue alors que le corps 1 s'avance pour suivre la sonde 8. En fin de pénétration, si le trou à contrôler a une longueur correcte, le repère 35 doit être en regard de l'extrémité de la partie biseautée 34 de la bague 17.

L'adaptation dans le corps 1 d'une sonde 8 spéciale telle qu'un tampon habituellement utilisé pour vérifier le diamètre et la qualité des taraudages, permet par une seule opération de vérifier la qualité et le diamètre des taraudages ainsi que leur longueur. On fait alors pénétrer le tampon par vissage dans l'alésage à contrôler, la partie antérieure filetée 10 venant en fin de course buter en fin de taraudage.

L'homme du métier pourrait combiner les différents modes de réalisation des dispositifs de blocage dans le corps 1 des sondes 8 avec les différents modes de réalisation des butées rapportées 26.

**Revendications**

1. Jauge de contrôle de profondeur d'un trou dans une pièce à contrôler (30), comprenant un corps (1) muni d'une sonde (8) destinée à pénétrer dans le trou, une pièce mobile (4, 17) coulissant longitudinalement sur le corps pendant le déplacement de la sonde dans le trou et comportant une extrémité antérieure (26, 7) destinée à venir en butée contre la partie extérieure de la pièce à contrôler (30), une butée (24, 22) pour limiter le déplacement de la pièce mobile vers l'avant en direction de la pièce à contrôler, et des moyens de repérage (11; 35, 34) pour déterminer la position de la pièce mobile par rapport au corps en fin d'introduction de la sonde (8) dans le trou, caractérisée en ce qu'elle comprend en outre des moyens de réglage (12) pour régler la position axiale de la sonde (8) par rapport au corps, des moyens de blocage (9; 15, 16) pour bloquer sélectivement la sonde (8) par rapaport au corps angulairement et axialement dans la position choisie, et des moyens élastiques (5) pour repousser la pièce mobile (4; 17) vers l'avant par rapport au corps (1).

2. Jauge selon la revendication 1, caractérisée en ce que le corps (1) est munie d'un alésage longitudinal (2) traversant dans lequel coulisse la sonde (8) rapportée et interchangeable.

3. Jauge selon la revendication 2, caractérisée en ce que la pièce mobile est une tige (4) coulissant dans un alésage (3) excentré du corps (1).

4. Jauge selon la revendication 2, caractérisée en ce que la pièce mobile est une bague (17) coulissant sur la surface extérieure (19) cylindrique du corps.

5. Jauge selon la revendication 4, caractérisée en ce que les moyens de réglage et de blocage comprennent une douille d'adaptation (12) rapportée sur le corps (1) et interchangeable, munie d'un alésage longitudinal (14) pour l'introduction de la sonde (8) avec un faible jeu et d'une vis radiale de blocage (15, 16).

6. Jauge selon la revendication 4, caractérisée en ce que les moyens de réglable et de blocage comprennent une pince élastique (38) sensiblement cylindrique munie d'un alésage longitudinal pour le passage de la sonde et dont la paroi est fendue, les extrémités de la surface extérieure de la pince étant coniques, la pince étant insérée dans l'alésage longitudinal du corps (1) pour venir porter contre un épaulement conique (37) correspondant de l'alésage du corps, poussée par un poussoir (40) axial de serrage, le poussoir étant muni d'un alésage longitudinal (41) pour le passage de la sonde, et étant réglable et bloquable en position longitudinale par rapport au corps.

7. Jauge selon la revendication 6, caractérisée en ce que le poussoir axial (40) est une vis s'adaptant dans l'extrémité postérieure taraudée (36) du corps (1).

8. Jauge selon la revendication 6, caractérisée en ce que le poussoir axial est une bague taraudée, adaptée par vissage sur l'extrémité postérieure filetée du corps (1).

9. Jauge selon la revendication 8, caractérisée en ce que la bague taraudée (40) est recouverte d'une bague folle (49) montée libre en rotation et bloquée longitudinalement, associée à des moyens de blocage amovibles (53) permettant de solidariser sélectivement la bague taraudée et la bague folle.

10. Jauge selon la revendication 9, caractérisée en ce qu'elle comprend en outre des moyens élastiques (52), assurant un frottement entre la bague taraudée (40) et la bague folle (49) pour assurer l'entraînement de l'une par l'autre en limitant le couple de manoeuvre transmis à la sonde.

11. Jauge selon l'une quelconque des revendications 4 à 10, caractérisée en ce que la pièce mobile comprend, adaptée sur son extrémité antérieure, une butée rapportée (26) munie d'un alésage longitudinal (27) pour le passage de la sonde (8) et conformée pour s'adapter à la forme de la surface de référence de la pièce à contrôler.

12. Jauge selon la revendication 11, caractérisée en ce que la butée rapportée (26) est montée folle en rotation, maintenue longitudinalement, pour se plaquer sans bouger contre la pièce à contrôler lors de la rotation éventuelle de la sonde pénétrant dans le trou.

13. Jauge selon la revendication 11, caractérisée en ce que la butée rapportée (26) comporte une partie postérieure sensiblement cylindrique (46) de préférence en cône inversé, s'engageant dans un alésage du corps (1) en forçant légèrement sur un joint torique (47) inséré dans une gorge circulaire de l'alésage du corps.

14. Jauge selon l'une quelconque des revendications 4 à 13, caractérisée en ce que les moyens de repérage comprennent des repères annulaires (35) ménagés sur le corps (1), en face desquels se déplace, lors de l'opération de contrôle, l'extrémité postérieure (34) de la bague coulissante (17) conformée en biseau.

15. Jauge selon la revendication 14, caractérisée en ce que l'extrémité postérieure (34) de la bague coulissante est munie d'encoches (56) pour rendre partiellement visibles les repères annulaires (35) en cas de dépassement de la bague coulissante (17).

16. Jauge selon l'une quelconque des revendications 1 à 15, caractérisée en ce que la sonde (8) est un tampon fileté habituellement utilisé pour vérifier les diamètres et la régularité des taraudages.

**Patentansprüche**

1. Messgerät zur Prüfung der Tiefe eines Loches in einem zu prüfenden Teil (30) mit einem Gehäuse (1), welches mit einer Sonde (8) versehen ist, welche dazu bestimmt ist, in das Loch einzudringen, einem beweglichen Teil (4, 17), welches longitudinal auf dem Gehäuse während der Verschiebung der Sonde in dem Loch gleitet und ein vorderes Ende (26, 7), welches dazu bestimmt ist, mit dem äusseren Teil des zu prüfenden Teils (30) in Eingriff zu bekommen, einen Anschlag (24, 22) zur Begrenzung der Verschiebung des beweglichen Teils nach vorn in Richtung auf das zu prüfende Teil und Ortsbestimmungseinrichtungen (11; 35, 34) zur Bestimmung der Position des beweglichen Teils im Verhältnis zum Gehäuse am Ende der Einführung der Sonde (8) in das Loch aufweist, dadurch gekennzeichnet, dass das Gerät ausserdem Einstelleinrichtungen (12) zum Einstellen der axialen Position der Sonde (8) im Verhältnis zum Gehäuse, Blockiereinrichtungen (9; 15, 16) zum selektiven Blockieren der Sonde (8) im Verhältnis zum Gehäuse winkelmässig und axial in der gewählten Position und elastische Einrichtungen (5) zum Zurückstossen des beweglichen Teils (4; 17) nach vorn im Verhältnis zum Gehäuse (1) aufweist.

2. Messgerät nach Anspruch 1, dadurch gekennzeichnet, dass das Gehäuse (1) eine durchgehende Längsbohrung (2) aufweist, in welcher die eingebrachte und auswechselbare Sonde (8) gleitet.

3. Messgerät nach Anspruch 2, dadurch gekennzeichnet, dass das bewegliche Teil eine Stange (4) ist, welche in einer exzentrischen Bohrung (3) des Gehäuses (1) gleitet.

4. Messgerät nach Anspruch 2, dadurch gekennzeichnet, dass das bewegliche Teil ein Ring (17) ist, der auf der zylindrischen Aussenseite (19) des Gehäuses gleitet.

5. Messgerät nach Anspruch 4, dadurch gekennzeichnet, dass die Einstell- und Blockiereinrichtungen eine auf das Gehäuse (1) aufgebrachte und auswechselbare Anpassungsbuchse (12) aufweisen, welche mit einer Längsbohrung (14) für die Einführung der Sonde (8) mit einem geringen Spiel und einer radialen Blockierschraube (15, 16) versehen ist.

6. Messgerät nach Anspruch 4, dadurch gekennzeichnet, dass die Einstell- und Blockiereinrichtungen ein im wesentlichen zylindrisches elastisches Klemmstück (38) aufweisen, welches eine Längsbohrung zum Hindurchführen der Sonde aufweist und dessen Wand geschlitzt ist, wobei die Enden der Aussenseite des Klemmstücks konisch sind und das Klemmstück in die Längsbohrung des Gehäuses (1) eingeführt ist, um auf einer entsprechenden konischen Schulter (37) der Bohrung des Gehäuses aufzuliegen, gedrückt durch eine axiale Festspanndruckvorrichtung (40), wobei die Druckvorrichtung mit einer Längsbohrung (41) für das Hindurchführen der Sonde versehen ist und in Längsposition im Verhältnis zum Gehäuse einstellbar und blockierbar ist.

7. Messgerät nach Anspruch 6, dadurch gekennzeichnet, dass die axiale Druckvorrichtung (40) eine Schraube ist, die sich in das hintere, mit Innengewinde versehene Ende (36) des Gehäuses (1) einfügt.

8. Messgerät nach Anspruch 6, dadurch gekennzeichnet, dass die axiale Druckvorrichtung ein mit Innengewinde versehener Ring ist, der auf dem hinteren, mit Gewinde versehenen Ende des Gehäuses (1) durch Schraubung aufgebracht ist.

9. Messgerät nach Anspruch 8, dadurch gekennzeichnet, dass der mit Innengewinde versehene Ring (40) mit einem beweglichen Ring (49) bedeckt ist, der frei drehbar gelagert und longitudinal blockiert ist, zugeordnet zu entfernbaren Blockiereinrichtungen (53), welche selektiv eine feste Verbindung des mit Innengewinde versehenen Ringes und des beweglichen Ringes ermöglichen.

10. Messgerät nach Anspruch 9, dadurch gekennzeichnet, dass ausserdem elastische Einrichtungen (52) vorgesehen sind, welche eine Reibung zwischen dem mit Innengewinde versehenen Ring (40) und dem beweglichen Ring (49) ermöglichen, um die Mitnahme des einen durch den anderen zu gewährleisten, wobei das der Sonde übertragene Betätigungsmoment begrenzt ist.

11. Messgerät nach einem der Ansprüche 4 bis 10, dadurch gekennzeichnet, dass das bewegliche Teil einen an seinem vorderen Ende angepassten, angesetzten Anschlag (26) aufweist, der mit einer Längsbohrung (27) zum Hindurchführen der Sonde (8) versehen ist und so geformt ist, um sich an die Form der Bezugsfläche des zu prüfenden Teils anzupassen.

12. Messgerät nach Anspruch 11, dadurch gekennzeichnet, dass der angesetzte Anschlag (26) drehbeweglich gelagert ist, longitudinal gehalten, um sich ohne Bewegung gegen das zu prüfende Teil während der möglichen Drehung der in das Loch eindringenden Sonde zu plattieren.

13. Messgerät nach Anspruch 11, dadurch gekennzeichnet, dass der angesetzte Anschlag (26) einen im wesentlichen zylindrischen hinteren Teil (46) vorzugsweise als umgekehrter Kegel aufweist, der in eine Bohrung des Gehäuses (1) eingreift, wobei er leicht auf eine in eine kreisförmige Nut der Bohrung des Gehäuses eingeführte Ringdichtung (47) drückt.

14. Messgerät nach einem der Ansprüche 4 bis 13, dadurch gekennzeichnet, dass die Ortsbestimmungseinrichtungen ringförmige Markierungen (35) aufweisen, die auf dem Gehäuse (1) ausgenommen sind, gegenüber welchen sich das hintere, schräg geformte Ende (34) des gleitenden Ringes (17) während der Prüfoperation verschiebt.

15. Messgerät nach Anspruch 14, dadurch gekennzeichnet, dass das hintere Ende (34) des gleitenden Ringes mit Ausschnitten (56) versehen ist, um die ringförmigen Markierungen (35) im Falle einer Überschreitung des gleitenden Ringes (17) teilweise sichtbar zu machen.

16. Messgerät nach einem der Ansprüche 1 bis 15, dadurch gekennzeichnet, dass die Sonde (8) ein mit Gewinde versehener Stopfen ist, welcher normalerweise benutzt wird, um die Durchmesser und die Regelmässigkeit von Innengewinden zu verifizieren.

## Claims

1. Gauge for checking the depth of a hole into a workpiece to be tested (30), comprising a body (1) having a probe (8) intended to penetrate into the hole, a mobile part (4, 17) sliding longitudinally over the body during the movement of the probe into the hole and having a front end (26, 7) intended to come into abutment against the outer part of the workpiece to be tested (30), a stop (24, 22) for limiting the movement of the mobile part in the forward direction, towards the workpiece to be tested, and indexing means (11; 35, 34) for determining the position of the mobile part with respect to the body at the end of introduction of the probe (8) into the hole, characterized in that it further comprises adjustment means (12) for adjusting the axial position of the probe (8) with respect to the body, locking means (9; 15, 16) for selectively locking the probe (8) with respect to the body angularly and axially in the chosen position, and resilient means (5) for urging the mobile part (4; 17) forwards with respect to the body (1).

2. The gauge as claimed in claim 1, characterized in that the body (1) has a longitudinal through-bore (2) in which slides the insert and interchangeable probe (8).

3. The gauge as claimed in claim 2, characterized in that the mobile part is a rod (4) sliding in an off-centered bore (3) of the body (1).

4. The gauge as claimed in claim 2, characterized in that the mobile part is a ring (17) sliding over the cylindrical outer surface (19) of the body.

5. The gauge as claimed in claim 4, characterized in that the adjustment and blocking means comprise, inserted in the body (1) and interchangeable, a matching socket (12) having a longitudinal bore (14) for introducing the probe (8) with a small clearance therein and a radial locking screw (15, 16).

6. The gauge as claimed in claim 4, characterized in that the adjustment and blocking means comprise a substantially cylindrical resilient clamp (38) having a longitudinal bore for passing the probe therethrough and whose wall is split, the ends of the outer surface of the clamp being tapered, the clamp being inserted in the longitudinal bore of the body (1) so as to come to bear against a corresponding tapered shoulder (37) of the bore of the body, and pushed by an axial tightening pusher (40), the pusher having a longitudinal bore (41) for passing the probe therethrough and being adjustable and lockable in a longitudinal position with respect to the body.

7. The gauge as claimed in claim 6, characterized in that the axial pusher (40) is a screw fitted into the tapped rear end (36) of the body (1).

8. The gauge as claimed in claim 6, characterized in that the axial pusher is an internally threaded ring, fitted by screwing onto the threaded rear end of the body (1).

9. The gauge as claimed in claim 8, characterized in that the threaded ring (40) is covered by a loose ring (49) mounted freely rotatable and longitudinally locked, associated with removable locking means (53) for selectively interlocking the threaded ring and the loose ring.

10. The gauge as claimed in claim 9, characterized in that resilient means (52) are further provided for ensuring friction between the threaded ring (40) and the loose ring (49) so that one drives the other while limiting the operating torque transmitted to the probe.

11. The gauge as claimed in any of claims 4 to 10, characterized in that the mobile part comprises, fitted to its front end, an insert stop (26) having a longitudinal bore (27) for passing the probe (8) therethrough and shaped so as to mate with the shape of the reference surface of the workpiece to be tested.

12. The gauge as claimed in claim 11, characterized in that the insert stop (26) is mounted freely rotatable and held in position longitudinally so as to come into abutment without moving against the workpiece to be tested during possible rotation of the probe penetrating into the hole.

13. The gauge as claimed in claim 11, characterized in that the insert stop (26) comprises a substantially cylindrical rear part (46) preferably in the form of an inverted cone engaging in the bore of the body (1) by forcing slightly on a O ring (47) inserted in a circular groove of the bore of the body.

14. The gauge as claimed in any of claims 4 to 13, characterized in that the indexing means comprise annular marks (35) formed on the body (1), opposite which the rear end (34) of the chamfered sliding ring (17) moves during the testing operation.

15. The gauge as claimed in claim 14, characterized in that the rear end (34) of the sliding ring is provided with notches (56) for making the annular marks (35) partially visible should the slinding ring (17) go therebeyond.

16. The gauge as claimed in any of claims 1 to 15, characterized in that the probe (8) is a threaded plug usually used for checking diameters and the evenness of the tappings.

fig. 1

fig. 3

fig. 2

fig. 4

fig. 5

fig. 6